# EUROPEAN PATENT SPECIFICATION

(11) **EP 2 002 928 B1**
(45) Date of publication and mention of the grant of the patent: **21.07.2010**
(21) Application number: 08010069.6
(22) Date of filing: 02.06.2008
(51) Int. Cl.: B23Q 11/14, B23Q 16/10

(54) **Rotary indexing apparatus comprising a cooling device for the table plate**
Rotierendes Indexierungsgerät mit einer Kühlvorrichtung für die Tischplatte
Appareil d'indexation rotatif comprenant un outil de refroidissement pour la table tournante

(30) Priority: 11.06.2007 JP 2007153904
(43) Date of publication of application: 17.12.2008
(73) Proprietor: TSUDAKOMA KOGYO KABUSHIKI KAISHA, Kanazawa-shi, Ishikawa-ken 921-8650 (JP)
(72) Inventor: Yonenaga, Takeshi, Kanazawa-shi Ishikawa-ken, 921-8650 (JP)
(74) Representative: Samson & Partner

(56) References cited:
- DE-A1- 4 128 276
- DE-U1-202005 012 908
- US-A1- 2002 122 608

## Description

### BACKGROUND OF THE INVENTION

### 1. Field of the Invention

The present invention relates to rotary indexing apparatuses, and more particularly, to a technique for preventing a table plate on which a workpiece is placed from being heated to a high temperature.

### 2. Description of the Related Art

Rotary indexing apparatuses are used for performing rotary indexing and processing operations for workpieces. An example of a rotary indexing apparatus includes a rotation transmission mechanism, such as a worm mechanism, for driving a rotating shaft with a motor. A table plate on which a workpiece is placed is fixed to the rotating shaft at an end thereof (see, for example, Japanese Unexamined Patent Application Publication No. 2002-18678).

Another example of a rotary indexing apparatus includes an internal motor for driving a rotating shaft. The internal motor includes a stator provided on a frame of the rotary indexing apparatus and a rotor provided on the rotating shaft. Similar to the above-mentioned example, a table plate is fixed to the rotating shaft at an end thereof (see, for example, Japanese Patent No. 3126366).

In the rotary indexing apparatus according to Japanese Unexamined Patent Application Publication No. 2002-18678, frictional heat is generated between tooth surfaces of the worm mechanism or the like that functions as the rotation transmission mechanism. Therefore, there is a problem that the ambient temperature of the rotating shaft is increased and the rotating shaft is heated to a high temperature.

In the rotary indexing apparatus according to Japanese Patent No. 3126366, load on the internal motor has recently been increased in accordance with the increase in the driving speed and the weight of the workpiece. Therefore, there is also a problem that the ambient temperature of the rotating shaft is increased and the rotating shaft is heated to a high temperature due to heat generated by the internal motor.

When the rotating shaft is heated to a high temperature, heat is transmitted to the table plate and causes deformation of the table plate, a workpiece-fixing jig attached to the table plate, and the workpiece. This results in reduction in the processing accuracy of the workpiece.

From DE 41 28 276 A1 a rotary apparatus is known which comprises a fixed portion and a movable portion having a turning shaft, and comprises a rotor, which can be connected integrally to the turning shaft by a support device. Between the fixed and the movable portion a fluid bearing is disposed to reduce friction.

### SUMMARY OF THE INVENTION

The present invention has been made in view of the above-described problems of the known rotary indexing apparatuses. An object of the present invention is to provide a rotary indexing apparatus capable of preventing a table plate from being heated to a high temperature when a rotating shaft is heated by frictional heat generated between tooth faces, heat generated by an internal motor, etc., and preventing thermal deformation of the table plate, a workpiece-fixing jig fixed to the table, and a workpiece that is placed directly on the table plate or on the workpiece-fixing jig fixed to the table plate.

In order to achieve the above-described object, the present invention provides a rotary indexing apparatus comprising a cooling device for a table plate which includes a frame, a rotating shaft supported by the frame, and the table plate provided at an end of the rotating shaft and which is capable of fixing a workpiece to be processed to the table plate.

The table plate is provided with a coolant channel for allowing coolant to pass therethrough, the coolant channel including at least one of a pipe and a path, the pipe being in contact with at least one of a back surface and an outer peripheral surface of the table plate and the path being disposed in the table plate. At least a portion of the coolant channel is disposed in areas which are outside the reference hole and which correspond to two or more of four quadrants of the table plate, the four quadrants being defined by two perpendicular lines intersecting at an axial center of the rotating shaft in a plan view. The reference hole is formed in the table plate such that the reference hole is coaxial with the rotating shaft.

The coolant channel has an inlet end and an outlet end that open in one of the outer peripheral surface of the table plate and an outer peripheral surface of the rotating shaft, the inlet end and the outlet end being respectively connected to a coolant-supplying path and a coolant-collecting path of a coolant supplying-and-collecting device through a rotary joint that is fitted to the one of the outer peripheral surface of the table plate and the outer peripheral surface of the rotating shaft.

As described above, the table plate has the coolant channel that is disposed in the table plate or on the back surface or outer peripheral surface of the table plate. The coolant channel is disposed in areas which are outside the reference hole for fixing the workpiece and which correspond to two or more of the four quadrants. In other words, the coolant channel continuously or discontinuously extends 180° or more around the axial center. Therefore, the table plate can be reliably cooled and the influence of heat to the table plate, the workpiece, and the workpiece-fixing jig can be eliminated.

In addition, the inlet end and the outlet end of the coolant channel open in the outer peripheral surface of one of the table plate and the rotating shaft, and are respectively connected to the coolant-supplying path and the coolant-collecting path of the coolant supplying-and-collecting device through the rotary joint that is fitted to the outer peripheral surface of one of the table plate and the rotating shaft. Therefore, the ends of the coolant channel can be connected to the coolant-supplying path and the coolant-collecting path in a relatively rotatable manner. As a result, the coolant can be reliably supplied after the coolant is cooled, and be quickly collected after heat is absorbed by the coolant.

The table plate may include a workpiece-side member and a back-side member stacked on each other, at least one of opposing surfaces of the workpiece-side member and the back-side member having a groove extending in the areas corresponding to two or more of the four quadrants. The coolant channel may include the path disposed in the table plate, the path either including the groove and the other one of the opposing surfaces, or including a groove formed in one of the opposing surfaces and a groove formed in the other one of the opposing surfaces.

In such a case, since the table plate includes the workpiece-side member and the back-side member stacked on each other and at least one of the opposing surfaces of the workpiece-side member and the back-side member has the groove, the path disposed in the table plate can be easily formed. More specifically, the workpiece-side member and the back-side member can be bonded to each other with bolts or the like while they are being stacked on each other, so that the path can be easily formed by the groove and the other one of the opposing surfaces or by a groove formed in one of the opposing surfaces and a groove formed in the other one of the opposing surfaces. Since the coolant directly comes into contact with the workpiece-side member and the back-side member without a pipe or the like disposed therebetween, the table plate can be efficiently cooled.

The groove may extend a plurality of turns in a spiral shape around the axial center of the rotating shaft.

In such a case, since the groove extends a plurality of turns in a spiral shape around the axial center of the rotating shaft, the path extends through all of the four quadrants and through both an inner area and an outer area in the radial direction. Therefore, the cooling effect of the coolant can be obtained over a wide area. In addition, as the overall length of the groove is increased, the area of the side walls of the groove is also increased. As a result, the contact area of the coolant is increased, so that improved cooling effect can be obtained.

The table plate may include a workpiece-side member and a back-side member stacked on each other, at least one of opposing surfaces of the workpiece-side member and the back-side member having a groove extending over the entire circumference around the axial center of the rotating shaft. The coolant channel may include the path disposed in the table plate, the path including a pipe contained in the groove such that the pipe is in contact with the table plate and extends a plurality of turns in a spiral shape over a range extending in a radial direction of the table plate.

In such a case, the table plate includes the workpiece-side member and the back-side member stacked on each other, and at least one of the opposing surfaces of the workpiece-side member and the back-side member has the groove extending over the entire circumference around the axial center of the rotating shaft and containing the pipe such that the pipe is in contact with the table plate and extends a plurality of turns in a spiral shape over a range extending in a radial direction of the table plate. Therefore, the path disposed in the table plate can be easily formed by the pipe by bonding the workpiece-side member and the back-side member to each other with bolts or the like while they are being stacked on each other. The groove may be formed in a ring shape having an inner peripheral wall and an outer peripheral wall. Alternatively, the groove may be formed so as to extend a plurality of turns in a spiral shape over a range extending in a radial direction of the table plate. In such a case, the pipe is arranged in a spiral shape along the groove.

The coolant channel may include a pipe that is in contact with the bottom surface of the table plate, the pipe being disposed on the back surface of the table plate such that the pipe extends a plurality of turns in a spiral shape, and the pipe may be connected to the inlet end and the outlet end of the coolant channel by being connected to guide paths formed in the table plate and the pipe may be covered by a lid attached to the back surface of the table plate.

Accordingly, the coolant channel can be easily formed on the bottom surface of the table plate, and the pipe can be sealed from the outside by the lid. Thus, working fluid, such as cutting oil and cooling-and-cleaning liquid, used for processing the workpiece and dust, such as shavings, can be prevented from adhering to the pipe. As a result, the cooling efficiency can be prevented from being reduced and the heat of cooling of the coolant can be prevented from being dissipated to the outside of the table plate. Thus, the cooling efficiency can be maintained.

### BRIEF DESCRIPTION OF THE DRAWINGS

Fig. 1 is a sectional view illustrating the overall structure of a rotary indexing apparatus according to an embodiment of the present invention;
Fig. 2 is a diagram illustrating the concept of four quadrants;
Fig. 3 is a sectional view illustrating the main part of a cooling device according to a first embodiment of the present invention;
Fig. 4 is a plan view of the cooling device according to the first embodiment in the state in which a workpiece-side member of a table plate is removed;
Fig. 5 is a sectional view illustrating the main part of a cooling device according to a modification of the first embodiment;
Fig. 6 is a sectional view illustrating the main part of a cooling device according to a second embodiment of the present invention;
Fig. 7 is a sectional view illustrating the main part of a cooling device according to a modification of the second embodiment;
Fig. 8 is a sectional view illustrating the main part of a cooling device according to a third embodiment of the present invention;
Fig. 9 is a sectional view illustrating the main part of a cooling device according to a modification of the third embodiment;
Fig. 10 is a plan view of a cooling device according to a fourth embodiment of the present invention in the state in which a workpiece-side member of a table plate is removed;
Fig. 11 is a plan view of a cooling device according to a fifth embodiment of the present invention in the state in which a workpiece-side member of a table plate is removed;
Fig. 12 is a plan view of a cooling device according to a sixth embodiment of the present invention in the state in which a workpiece-side member of a table plate is removed;
Fig. 13 is a sectional view of a cooling device according to a seventh embodiment of the present invention taken along a plane perpendicular to a rotating shaft; and
Fig. 14 is a plan view of a cooling device according to an eighth embodiment of the present invention in the state in which a workpiece-side member of a table plate is removed.

### DESCRIPTION OF THE PREFERRED EMBODIMENTS

Embodiments of the present invention will be described in detail below with reference to the accompanying drawings.

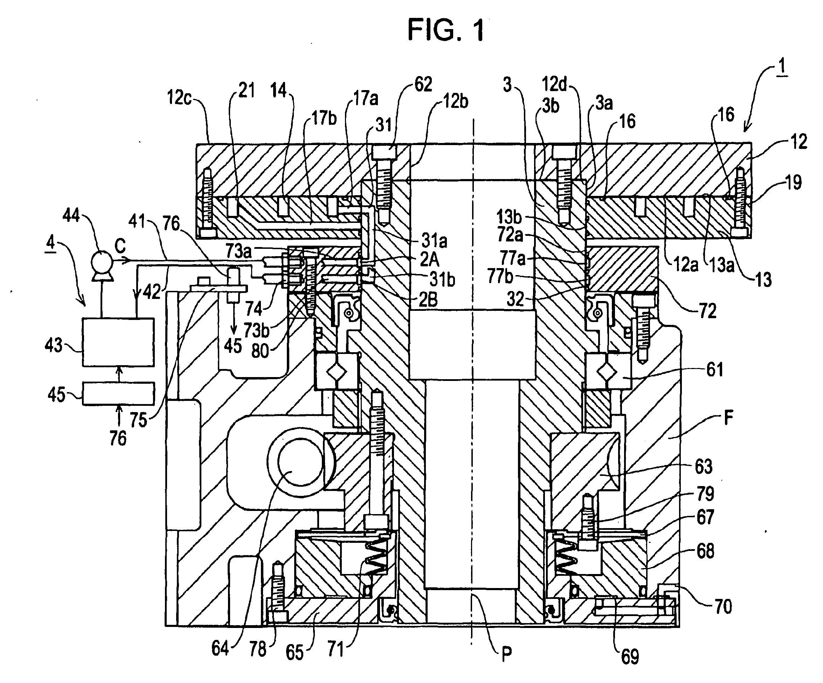

In each embodiment, a cooling device for a table plate is included in a rotary indexing apparatus in which a rotating shaft 3 is driven by a drive motor through a worm mechanism that functions as a rotation transmission mechanism. Fig. 1 is a sectional view illustrating the overall structure of the rotary indexing apparatus. The rotary indexing apparatus includes a frame F, the rotating shaft 3 supported by the frame F, and a table plate 1 provided at an end of the rotating shaft 3. A workpiece to be processed can be directly fixed to the table plate 1 or be fixed to a workpiece-fixing jig that is fixed to the table plate 1. The drive motor (not shown) drives the rotating shaft 3 to set a processing position.

The rotating shaft 3 is rotatably supported by a bearing 61 in the frame F, and has a hollow structure. The table plate 1 is fitted to an outer peripheral surface 3a of the rotating shaft 3 at an end of the rotating shaft 3, and is fixed to an end face 3b of the rotating shaft 3 with a plurality of bolts 62. The table plate 1 is arranged such that the axis thereof coincides with an axial center P of the rotating shaft 3.

A worm wheel 63 is fitted to the rotating shaft 3 and is fixed thereto with bolts. The worm wheel 63 meshes with a worm 64 that is supported by the frame F in a rotatable manner.

The rotary indexing apparatus according to the present embodiment includes a clamp device at an end opposite to the table plate 1, that is, at the bottom.

The clamp device includes a cylinder head 65, a piston 68, and an annular clamp disc 67. The cylinder head 65 is fitted to an inner peripheral surface of the frame F at the bottom thereof and is fixed to the frame F with a bolt 78. The piston 68 is disposed in a space defined by the cylinder head 65 and the frame F and is fitted to both the outer peripheral surface of the cylinder head 65 and the inner peripheral surface of the frame F. The piston 68 is movable in a direction in which the axial center P of the rotating shaft 3 extends, that is, in the axial direction of the rotating shaft 3. The clamp disc 67 is fixed to a bottom end face of the worm wheel 63 with a bolt 79. A pressure chamber 69 is formed between opposing surfaces of the piston 68 and the cylinder head 65. Return springs 71 are provided so as to extend in the axial direction of the rotating shaft 3. One end of each return spring 71 is secured to the cylinder head 65 and the other end is secured to the piston 68. The piston 68 is urged toward the bottom by the return springs 71. Pressure fluid, such as air and hydraulic oil, enters the pressure chamber 69 through a supply path 70.

A clamping operation will now be described. When the worm 64 is rotated by a drive motor (not shown), the worm wheel 63 that meshes with the worm 64 also rotates. Accordingly, the rotating shaft 3, the table plate 1, and the clamp disc 67 rotate.

When the rotational angle reaches a predetermined angle, the rotating operation is stopped and the pressure fluid is supplied to the pressure chamber 69 through the supply path 70. Thus, the piston 68 moves in the axial direction against the urging force applied by the return springs 71, and presses the clamp disc 67 against the frame F. Due to this operation of the piston 68, frictional force is generated between the clamp disc 67 and the frame F. The rotating shaft 3 to which the clamp disc 67 is fixed is integrated with the frame F by the frictional force, so that the table plate 1 is prevented from being rotated even when an external force is applied thereto. The table plate 1 can be rotated again by releasing the pressure applied to the pressure chamber 69 and allowing the return springs 71 to remove the piston 68 from the clamp disc 67.

### First Embodiment

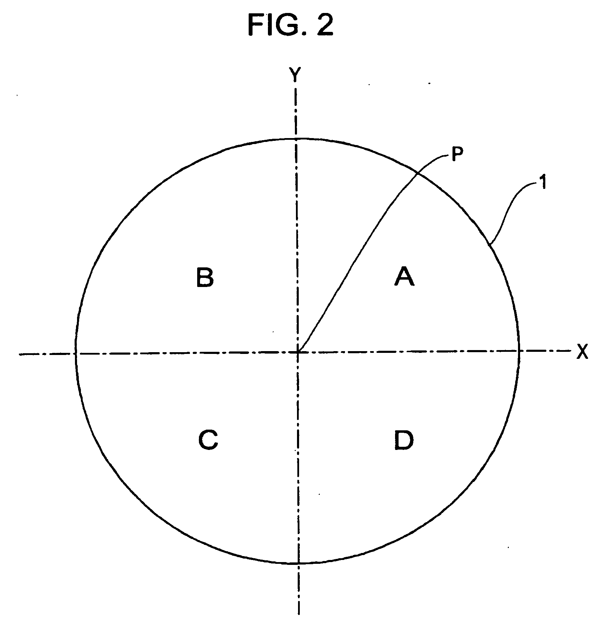

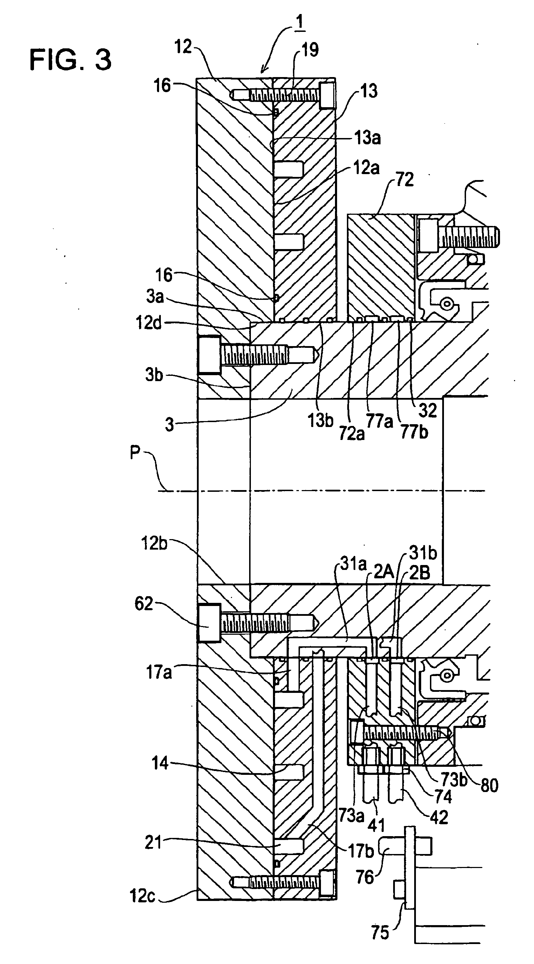

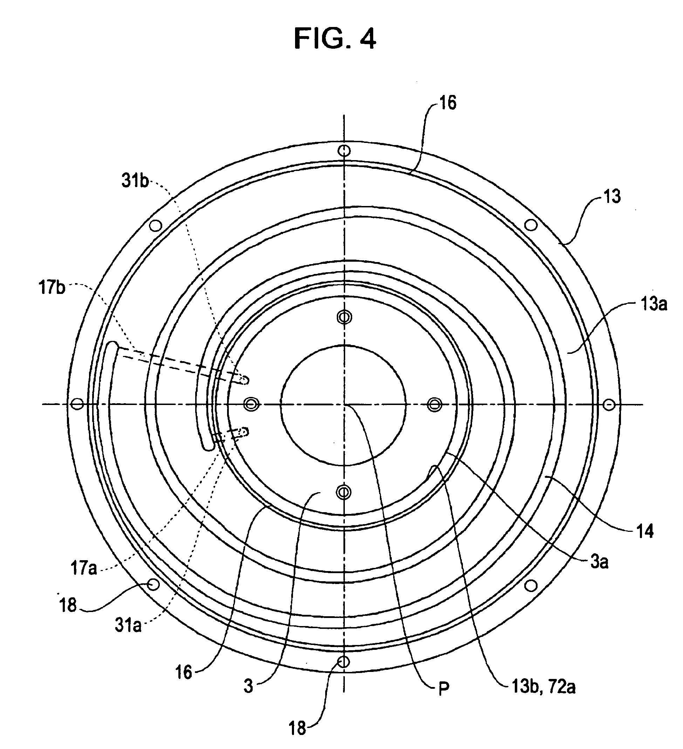

A cooling device according to a first embodiment of the present invention will be described with reference to Figs. 1 to 4. Fig. 2 is a diagram illustrating the concept of four quadrants. Fig. 3 is a sectional view illustrating the main part of the cooling device according to the first embodiment. Fig. 4 is a plan view, viewed from a workpiece side, illustrating the state in which a workpiece-side member 12 included in the table plate 1 is removed.

The table plate 1 includes the workpiece-side member 12 and a back-side member 13. The workpiece-side member 12 is fixed to the end face 3b of the rotating shaft 3 with the bolts 62, as described above. The workpiece-side member 12 has a reference hole 12b, which functions as a reference when the workpiece is fixed, in a workpiece-fixing surface 12c thereof. The reference hole 12b is formed coaxially with a fitting hole 12d to which the outer peripheral surface 3a of the rotating shaft 3 is fitted. Thus, the reference hole 12b is also coaxial with the rotating shaft 3. The workpiece-fixing jig or the workpiece is attached to the reference hole 12b formed in the workpiece-fixing surface 12c. Alternatively, a workpiece-positioning jig or a dimensional measurement device, such as a slide caliper, is attached to the reference hole 12b and is removed after the workpiece or the workpiece-fixing jig is fixed. In this manner, the reference hole 12b functions as a reference for fixing the workpiece, that is, for processing the workpiece. In the present embodiment, the reference hole 12b extends through the workpiece-side member 12. However, the reference hole 12b may also be a blind hole, that is, a hole having a bottom surface. The back-side member 13 has a spiral groove 14, which will be described below, in an opposing surface 13a that is opposed to the workpiece-side member 12. The workpiece-side member 12 has a plurality of internal threads, and the back-side member 13 has a plurality of bolt holes 18 at positions corresponding to the internal threads. The members 12 and 13 are bonded together with bolts 19 such that the workpiece-side member 12 is stacked on the back-side member 13, that is, such that opposing surfaces 12a and 13a of the members 12 and 13, respectively, face each other.

Referring to Fig. 4, the back-side member 13 has inner and outer 0-ring grooves in the opposing surface 13a, and a small-diameter O-ring 16 and a large-diameter O-ring 16 are attached to the inner and outer O-ring grooves, respectively. The groove 14 is formed between the inner and outer O-ring grooves in a spiral shape so as to extend a plurality of turns around the axial center P of the rotating shaft 3 over a range extending in the radial direction. In the present embodiment, the groove 14 extends substantially two turns around the axial center P. The opposing surface 12a of the workpiece-side member 12 and the groove 14 form a portion of a path 21. The inner and outer ends of the groove 14 are respectively connected to a coolant supplying guide path 17a and a coolant collecting guide path 17b, which function as other portions of the path 21. The guide paths 17a and 17b are connected to openings formed in an inner peripheral surface 13b to which the outer peripheral surface 3a of the rotating shaft 3 is fitted. Thus, the supplying guide path 17a, the opposing surface 12a of the workpiece-side member 12, the groove 14, and the collecting guide path 17b form the path 21 in the table plate 1. The path 21 functions as a portion of a coolant channel 2.

The rotating shaft 3 has a supplying guide path 31a and a collecting guide path 31b, which function as other portions of the coolant channel 2. First ends of the supplying guide path 31a and the collecting guide path 31b are connected to openings formed in the outer peripheral surface 3a at positions corresponding to the guide path 17a and the guide path 17b, respectively. Second ends of the supplying guide path 31a and the collecting guide path 31b are connected to openings formed in the outer peripheral surface 3a at positions farther from the workpiece than the first ends. Thus, the path 21, the supplying guide path 31a, and the collecting guide path 31b form the coolant channel 2, and the coolant channel 2 has an inlet end 2A and an outlet end 2B formed in the outer peripheral surface 3a of the rotating shaft 3.

The outer peripheral surface 3a of the rotating shaft 3 is fitted to an inner peripheral surface 72a of a rotary joint body 72 such that the rotating shaft 3 can rotate with respect to the rotary joint body 72. The rotary joint body 72 is fixed to the frame F with a bolt 80. The rotary joint body 72 has a supplying circumferential groove 77a and a collecting circumferential groove 77b formed in the inner peripheral surface 72a thereof. The circumferential grooves 77a and 77b are respectively formed at positions corresponding to the positions of the second ends of the supplying guide path 31a and the collecting guide path 31b in the axial direction. The rotary joint body 72 also has a supplying guide path 73a and a collecting guide path 73b that extend through the rotary joint body 72 in the radial direction. First ends of the supplying guide path 73a and the collecting guide path 73b are connected to the supplying circumferential groove 77a and the collecting circumferential groove 77b, respectively. Second ends of the supplying guide path 73a and the collecting guide path 73b are connected to pipes that function as a coolant-supplying path 41 and a coolant-collecting path 42, respectively, via connectors 74.

The outer peripheral surface 3a of the rotating shaft 3 and the rotary joint body 72 form a rotary joint. The second ends of the guide paths 31a and 31b are connected to the openings in the outer peripheral surface 3a. The rotary joint body 72 has the two circumferential grooves 77a and 77b and the two guide paths 73a and 73b connected to the circumferential grooves 77a and 77b, respectively. Three 0-rings 32 are provided such that the two circumferential grooves 77a and 77b are placed between the three O-rings 32. The O-rings 32 are fitted to O-ring grooves formed in the inner peripheral surface 72a or the outer peripheral surface 3a. In the present embodiment, the O-ring grooves are formed in the inner peripheral surface 72a. Although the two circumferential grooves 77a and 77b are formed in the inner peripheral surface 72a of the rotary joint body 72, the two circumferential grooves may also be formed in the outer peripheral surface 3a of the rotating shaft 3.

A coolant supplying-and-collecting device 4 includes the coolant-supplying path 41 and the coolant-collecting path 42 formed of pipes. The coolant supplying-and-collecting device 4 also includes a heat exchanger 43, which includes a compressor, a radiator, etc., for cooling coolant C and a pump 44 for supplying the coolant C. The coolant supplying-and-collecting device 4 also includes a control device 45 for controlling the flow, temperature, supply pressure, etc. of the coolant C.

The coolant C is cooled by the heat exchanger 43 and is supplied by the pump 44 so that the coolant C passes through the coolant-supplying path 41 and reaches the corresponding connector 74 on the rotary joint body 72. Then, the coolant C passes through the supplying guide path 73a and reaches the inlet end 2A of the coolant channel 2 through the supplying circumferential groove 77a. Then, the coolant C passes through the supplying guide path 31a, which functions as a portion of the coolant channel 2, in the rotating shaft 3. The coolant C flows into the supplying guide path 17a, which forms the path 21 that functions as another portion of the coolant channel 2, from the supplying guide path 31a. Then, the coolant C flows through the path 21 formed by the opposing surface 12a of the workpiece-side member 12 and the groove 14, and then through the collecting guide path 17b, which also forms the path 21. Thus, the table plate 1 is cooled by the coolant C. Then, the coolant C flows from the collecting guide path 17b into the collecting guide path 31b, which functions as another portion of the coolant channel 2, in the rotating shaft 3. Then, the coolant C reaches the outlet end 2B of the coolant channel 2 and enters the circumferential groove 77b. The coolant C flows into the collecting guide path 73b from the circumferential groove 77b and reaches the corresponding connector 74. Then, the coolant C flows through the coolant-collecting path 42 and reaches the heat exchanger 43, where the coolant C is cooled.

In the present embodiment, the coolant supplying-and-collecting device 4 further includes a temperature sensor 76 for measuring the temperature at the back surface of the table plate 1, that is, at the surface of the back-side member 13. The temperature sensor 76 is fixed to a sensor bracket 75, which is fixed to the frame F. The temperature sensor 76 measures the surface temperature of the back-side member 13 without coming into contact therewith by using, for example, infrared light. The temperature of the table plate 1 is maintained constant by controlling the flow of the coolant C on the basis of the detection value obtained by the temperature sensor 76 and a predetermined threshold. The flow of the coolant C is controlled by, for example, controlling the rotational speed of the pump 44, switching the pump 44 or the compressor between operating and non-operating states, or adjusting the opening ratio of a throttle valve if the throttle valve is used.

The temperature of the table plate 1 can also be maintained constant by controlling the rotational speed of the compressor to control the temperature of the supplied coolant C. Instead of measuring the temperature of the table plate 1, the temperature of a portion of the frame F near the table plate 1, that is, a portion that receives radiant heat from the table plate 1, may also be measured. In such a case, a contact temperature sensor, such as a thermocouple, can be used in place of the non-contact sensor using infrared light or the like. Therefore, the detection result can be prevented from being influenced by shavings that adhere to a light receiving unit.

The control device 45 may control the pump 44, the compressor, etc., in conjunction with the operation of a control device for controlling a machine tool or the rotary indexing apparatus. For example, the operation of the pump 44 and the compressor may be stopped or the operation level thereof may be reduced when a predetermined time elapses after the indexing operation performed by the rotary indexing apparatus is finished. Then, when the indexing operation is restarted, the operation of the pump 44 and the compressor may be started again or the operation level thereof may be returned to the original level. As a result, excessive cooling of the table plate 1 can be prevented. Such an operation is advantageous in the case where the temperature control of the table plate 1 using the temperature sensor is not performed.

Fig. 2 is a diagram illustrating four quadrants A, B, C, and D of the table plate 1. The four quadrants A, B, C, and D are defined by two perpendicular lines that intersect at the axial center P of the rotating shaft 3 in a plan view of the table plate 1, that is, when the table plate 1 is viewed from the workpiece side in Fig. 1, which shows the sectional view of the overall structure. More specifically, the quadrants A, B, C, and D of the table plate 1 are defined by two centerlines extending in the X and Y directions and passing through the axial center P. As described above, the groove 14 is formed in the opposing surface 13a of the back-side member 13 in a spiral shape so as to extend a plurality of turns around the axial center P of the rotating shaft 3 over a range extending in the radial direction. Thus, the path 21 defined by the opposing surface 12a of the workpiece-side member 12 and the groove 14 is formed in the table plate 1 so as to extend in all of the four quadrants A, B, C, and D. In other words, the path 21 extends 360° around the axial center P of the rotating shaft 3. Since the path 21 extends in all of the four quadrants A, B, C, and D, the table plate 1 can be evenly cooled in the circumferential direction. In addition, the path 21 is formed to have a relatively long length so that the table plate 1 can be cooled with high efficiency. Furthermore, since the path 21 extends over a range extending in the radial direction, the entire area of the table plate 1 can be evenly cooled. In addition, the path 21 is formed to have a longer length so that the table plate 1 can be cooled with a higher efficiency.

In the present embodiment, the groove 14 is formed in the opposing surface 13a of the back-side member 13, that is, in the opposing surface 13a of the back-side member 13 at which the back-side member 13 faces the workpiece-side member 12, and the path 21 is formed in the table plate 1 by the opposing surface 12a and the groove 14. However, the groove 14 may also be formed in the opposing surface 12a of the workpiece-side member 12, that is, in the opposing surface 12a of the workpiece-side member 12 at which the workpiece-side member 12 faces the back-side member 13. In such a case, the path 21 is formed in the table plate 1 by the opposing surface 13a and the groove 14. The groove 14 may also be formed in each of the opposing surfaces 12a and 13a. In such a case, the bottom surface of the groove 14 in the opposing surface 12a and the bottom surface of the groove 14 in the opposing surface 13a form the path 21.

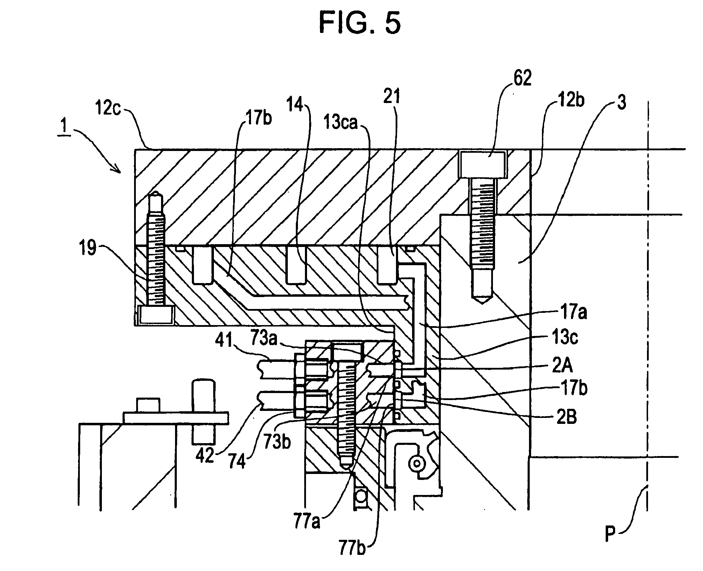

Fig. 5 shows a modification of the present embodiment. In this modification, a back-side member 13 has a small-diameter portion 13c on the back side thereof, and a rotary joint body 72 is fitted to an outer peripheral surface 13ca of the small-diameter portion 13c. Circumferential grooves 77a and 77b are formed in the outer peripheral surface 13ca. A path 21 is formed by a groove 14 and an opposing surface 12a of a workpiece-side member 12, and first ends of guide paths 17a and 17b are respectively connected to inner and outer ends of the path 21 in the radial direction. Second ends of the guide paths 17a and 17b are connected to the circumferential grooves 77a and 77b, respectively. Thus, an inlet end 2A and an outlet end 2B of a coolant channel 2 are connected to the circumferential grooves 77a and 77b, respectively.

### Second Embodiment

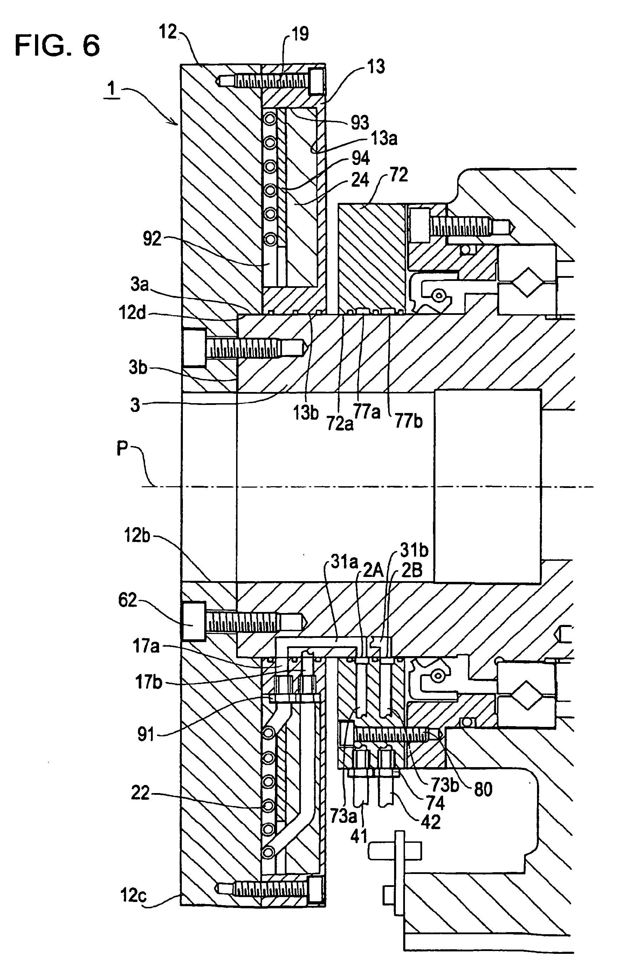

A second embodiment of the present invention will be described with reference to Fig. 6, which is a sectional view of the main part of the second embodiment.

According to the present embodiment, similar to the first embodiment, a table plate 1 is formed by stacking a workpiece-side member 12 on a back-side member 13, and the members 12 and 13 are bonded together with bolts 19. A circumferential groove 93 is formed in an opposing surface 13a of the back-side member 13 such that the groove 93 extends in the circumferential direction over the entire circumference around an axial center P of a rotating shaft 3.

A pipe 22 is disposed in the circumferential groove 93 such that the pipe 22 extends a plurality of turns (five turns in the present embodiment) in a spiral shape over a range extending in the radial direction and such that the pipe 22 is in contact with an opposing surface 12a of the workpiece-side member 12. A pressing plate 94 made of metal or plastic and a heat-insulating member 24 made of urethane foam are disposed between the bottom surface of the circumferential groove 93 and the pipe 22. The heat-insulating member 24 applies elastic force to the pressing plate 94 so that the pipe 22 is pressed against the opposing surface 12a. Thus, the state in which the pipe 22 is in contact with the opposing surface 12a is maintained. A supplying guide path 17a and a collecting guide path 17b are formed in an inner wall of the circumferential groove 93 so as to extend therethrough in the radial direction, and are connected to openings formed in the inner peripheral surface 13b. Thus, the supplying guide path 17a and the collecting guide path 17b are respectively connected to a supplying guide path 31a and a collecting guide path 31b formed in the rotating shaft 3. Connectors 91 are attached to openings of the guide paths 17a and 17b formed in the inner wall of the circumferential groove 93. Inner and outer ends of the pipe 22 in the radial direction are respectively connected to the supplying guide path 17a and the collecting guide path 17b through the connectors 91. Thus, the pipe 22 functions as a path 21 that is formed in the table plate 1 so as to extend a plurality of turns in a spiral shape over a range extending in the radial direction. The pipe 22 and the guide paths 17a, 17b, 31a, and 31b form a coolant channel 2.

In the above-described structure, coolant C passes through the pipe 22 while the pipe 22 is in contact with the workpiece-side member 12 that is heated, and thus the heat can be absorbed. Although the pipe 22 shown in Fig. 6 has a circular shape in cross section, the pipe 22 may have any cross sectional shape, such as a rectangular shape. If the pipe 22 has a rectangular shape in cross section, the contact area between the pipe 22 through which the coolant C passes and the workpiece-side member 12 can be increased. As a result, the heat-absorbing area can be increased.

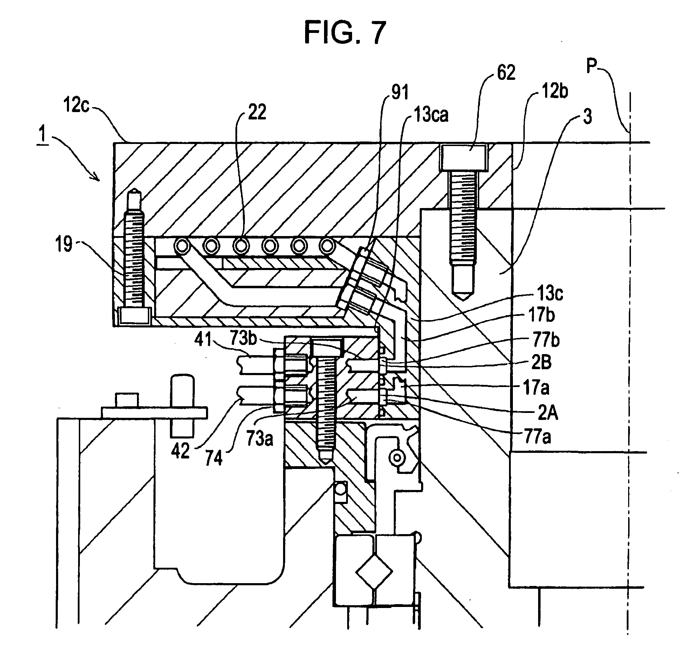

Fig. 7 shows a modification of the second embodiment. In this modification, a back-side member 13 has a small-diameter portion 13c on the back side thereof, and a rotary joint body 72 is fitted to an outer peripheral surface 13ca of the small-diameter portion 13c. Circumferential grooves 77a and 77b are formed in the outer peripheral surface 13ca, and guide paths 17a and 17b are connected to the circumferential grooves 77a and 77b, respectively. Thus, an inlet end 2A and an outlet end 2B of a coolant channel 2 are connected to the circumferential grooves 77a and 77b, respectively.

### Third Embodiment

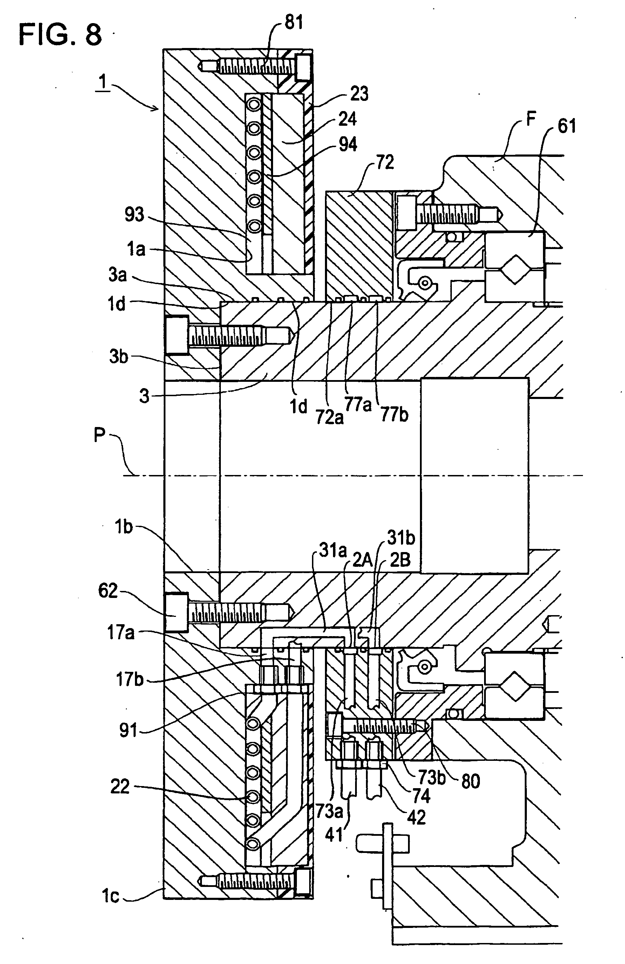

A third embodiment of the present invention will be described with reference to Fig. 8, which is a sectional view of the main part of the third embodiment. Different from the first and second embodiments in which the table plate 1 is formed of the workpiece-side member 12 and the back-side member 13, according to the present embodiment, a table plate 1 is formed as a single, integral member. The table plate 1 is fixed to an end face 3b of a rotating shaft 3 with a plurality of bolts 62 while an outer peripheral surface 3a of the rotating shaft 3 is fitted to a fitting hole 1d. Thus, a workpiece-fixing reference hole 1b formed coaxially with the fitting hole 1d in a workpiece-fixing surface 1c is arranged to be coaxial with the rotating shaft 3. The table plate 1 has a circumferential groove 93 formed in a back surface la thereof. The circumferential groove 93 is covered with a lid 23 that is fixed to the table plate 1 with bolts 81. A space for receiving a pipe 22 is formed between the table plate 1 and the lid 23.

The pipe 22 is disposed in the space such that the pipe 22 extends a plurality of turns (five turns in the present embodiment) in a spiral shape over a range extending in the radial direction and such that the pipe 22 is in contact with the back surface 1a of the table plate 1. A pressing plate 94 and a heat-insulating member 24 made of urethane foam are also disposed in the above-mentioned space. The heat-insulating member 24 applies elastic force to the pressing plate 94 so that the pipe 22 is pressed against the back surface la of the table plate 1. Thus, the state in which the pipe 22 is in contact with the back surface la of the table plate 1 is maintained.

According to the present embodiment, a supplying guide path 17a and a collecting guide path 17b are formed in an inner wall of the circumferential groove 93 in the table plate 1 so as to extend therethrough, and are connected to openings formed in the inner surface of the fitting hole 1d. Thus, the supplying guide path 17a and the collecting guide path 17b are respectively connected to a supplying guide path 31a and a collecting guide path 31b formed in the rotating shaft 3.

Connectors 91 are attached to openings of the guide paths 17a and 17b formed in the inner wall. Inner and outer ends of the pipe 22 in the radial direction are respectively connected to the supplying guide path 17a and the collecting guide path 17b through the connectors 91. Thus, the pipe 22 functions as a pipe that is in contact with the back surface la of the table plate 1 and that forms a coolant path 2. The pipe 22 extends a plurality of turns in a spiral shape over a range extending in the radial direction. The pipe 22 and the guide paths 17a, 17b, 31a, and 31b form the coolant channel 2.

The heat-insulating member 24 made of urethane foam can be omitted if the lid 23 is made of heat-insulating material, such as phenolic resin. In such a case, internal threads are formed in the back surface la, and the pressing plate 94 is fixed to the back surface 1a with screws. Thus, the pipe 22 is pressed between the table plate 1 and the pressing plate 94 and the state in which the pipe 22 is in contact with the back surface 1a of the table plate 1 can be maintained.

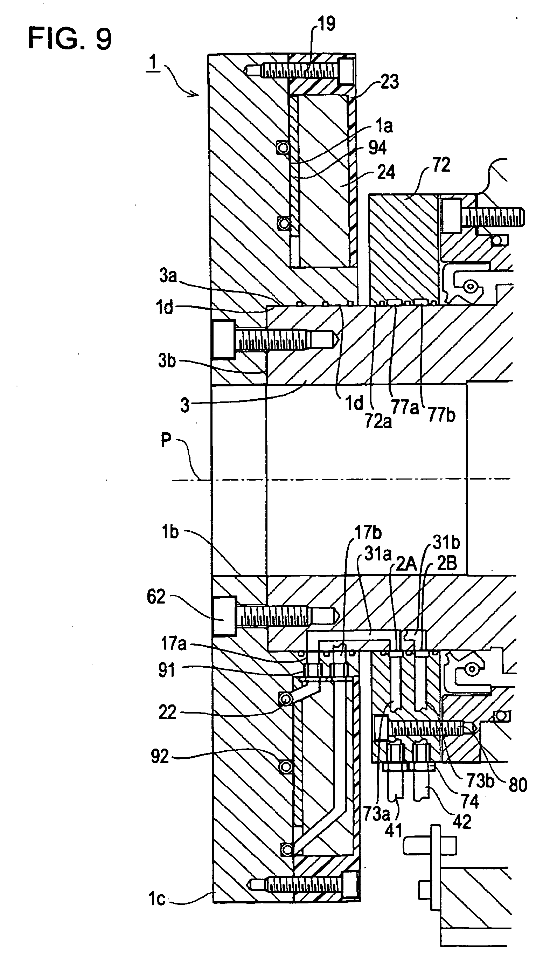

Fig. 9 shows a modification of the third embodiment. In this modification, a spiral groove 92 is formed in a back surface la of a table plate 1 such that the spiral groove 92 extends a plurality of turns over a range extending in the radial direction. A lid 23 is attached to the table plate 1 with bolts 81. The lid 23 covers the spiral groove 92 and forms a space for receiving end portions of a pipe 22, which is fitted to the spiral groove 92, between the lid 23 and the back surface 1a of the table plate 1. The space receives not only the end portions of the pipe 22 but also a pressing plate 94 and a heat-insulating member 24 made of urethane foam. The heat-insulating member 24 applies elastic force to the pressing plate 94 so that the pipe 22 is pressed against the back surface la of the table plate 1. Thus, the state in which the pipe 22 is in contact with the back surface la of the table plate 1 is maintained. The pipe 22 is in contact with and in the proximity of side surfaces and a bottom surface, that is, the back surface 1a, of the spiral groove 92, so that the table plate 1 can be efficiently cooled by coolant C.

### Fourth Embodiment

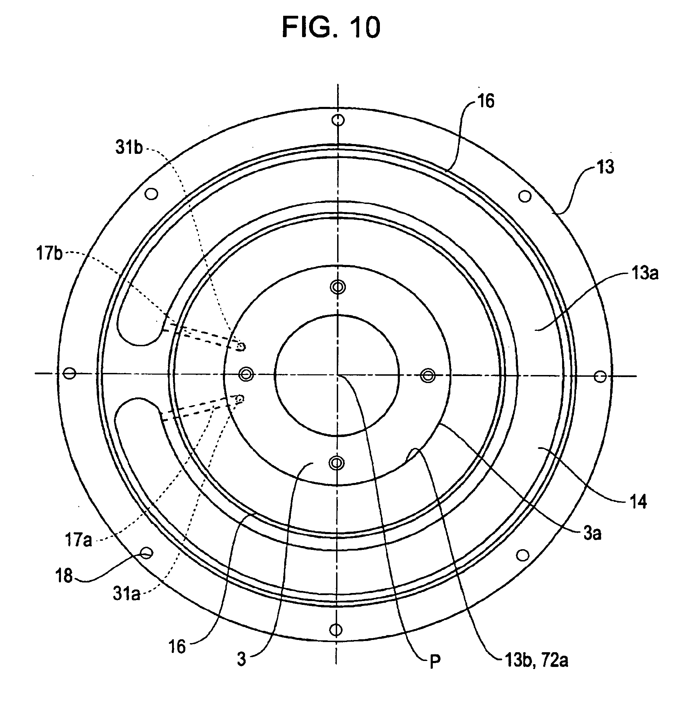

A fourth embodiment of the present invention will be described with reference to Fig. 10. In the fourth embodiment, similar to the first embodiment, a table plate 1 is formed by stacking a workpiece-side member 12 on a back-side member 13, and the members 12 and 13 are bonded together with bolts 19. Fig. 10 is a plan view, viewed from a workpiece side, illustrating the state in which the workpiece-side member 12 included in the table plate 1 is removed.

Referring to Fig. 10, the back-side member 13 has inner and outer O-ring grooves in an opposing surface 13a thereof, and a small-diameter O-ring 16 and a large-diameter O-ring 16 are attached to the inner and outer O-ring grooves, respectively. A groove 14 is formed between the inner and outer O-ring grooves so as to extend about 340° around an axial center P of a rotating shaft 3.

An opposing surface 12a of the workpiece-side member 12 and the groove 14 form a portion of a path 21 in the table plate 1. The ends of the groove 14 are respectively connected to a coolant supplying guide path 17a and a coolant collecting guide path 17b, which function as other portions of the path 21. The guide paths 17a and 17b are connected to openings formed in an inner peripheral surface 13b to which an outer peripheral surface 3a of the rotating shaft 3 is fitted. Thus, the supplying guide path 17a, the opposing surface 12a of the workpiece-side member 12, the groove 14, and the collecting guide path 17b form the path 21 in the table plate 1. The path 21 functions as a portion of a coolant channel 2.

The path 21, a supplying guide path 31a formed in the rotating shaft 3, and a collecting guide path 31b formed in the rotating shaft 3 form the coolant channel 2. The coolant channel 2 has an inlet end 2A and an outlet end 2B formed in the outer peripheral surface 3a of the rotating shaft 3. The inlet end 2A and the outlet end 2B are respectively connected to a coolant-supplying path 41 and a coolant-collecting path 42 through a supplying guide path 73a and a collecting guide path 73b formed in a rotary joint body 72 and connectors 74. This structure is similar to the structure of the first embodiment.

According to the present embodiment, in the four quadrants shown in Fig. 2, the path 21 is formed so as to continuously extend over the entire circumferential range in each of the quadrants A and D and over a range corresponding to about 80° in each of the quadrants B and C. Thus, the path 21 extends about 340° around the axial center P of the rotating shaft 3.

In addition, according to the present embodiment, the groove 14 that forms a portion of the path 21 in the table plate 1 has a larger width, that is, a larger dimension in the radial direction, compared to the width of the groove 14 according to the first embodiment. Therefore, the path 21 has a flatter shape and the contact area of the coolant C is increased, so that the cooling efficiency is improved. In addition, the table plate 1 can be more evenly cooled by the coolant C in the radial direction.

### Fifth Embodiment

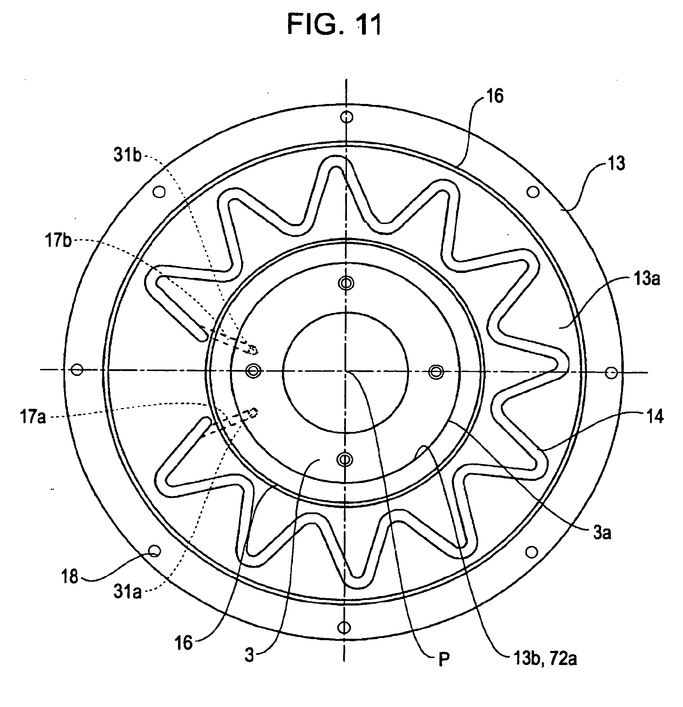

A fifth embodiment of the present invention will be described with reference to Fig. 11. In the fourth embodiment, similar to the first and fourth embodiments, a table plate 1 is formed of a workpiece-side member 12 and a back-side member 13. Fig. 11 is a plan view, viewed from a workpiece side, illustrating the state in which the workpiece-side member 12 included in the table plate 1 is removed.

The back-side member 13 included in the table plate 1 has a groove 14 formed in an opposing surface 13a thereof. The groove 14 and an opposing surface 12a of the workpiece-side member 12 form a path 21 in the table plate 1. The groove 14 includes connecting groove portions, each of which extends between an inner position and an outer position in the radial direction, the inner and outer positions having different phases with respect to an axial center P of a rotating shaft 3. In the present embodiment, the groove 14 includes the connecting groove portions and is formed in a zigzag shape such that the adjacent connecting groove portions are connected to each other with arc-shaped groove portions. The ends of the groove 14 are respectively connected to guide paths 17a and 17b. The guide paths 17a and 17b are connected to openings formed in an inner peripheral surface 13b to which an outer peripheral surface 3a of the rotating shaft 3 is fitted.

According to the present embodiment, in the four quadrants shown in Fig. 2, the path 21 is formed so as to continuously extend over the entire circumferential range in each of the quadrants A and D and over a range corresponding to about 80° in each of the quadrants B and C. Thus, the path 21 extends about 340° around the axial center P of the rotating shaft 3. Since the path 21 is formed in a zigzag shape, the path 21 has a relatively long length. Therefore, the cooling efficiency is improved and the table plate 1 is evenly cooled in the radial direction by the coolant C. The inner and outer positions of the connecting groove portions in the radial direction with respect to the axial center P, that is, distances between the axial center P and the inner and outer positions, can be gradually reduced or increased along the circumferential direction so as to prevent a supplying portion and a collecting portion of the groove 14 from crossing each other. Thus, the path 21 can be formed in a zigzag shape so as to extend one or more turns around the axial center P.

### Sixth Embodiment

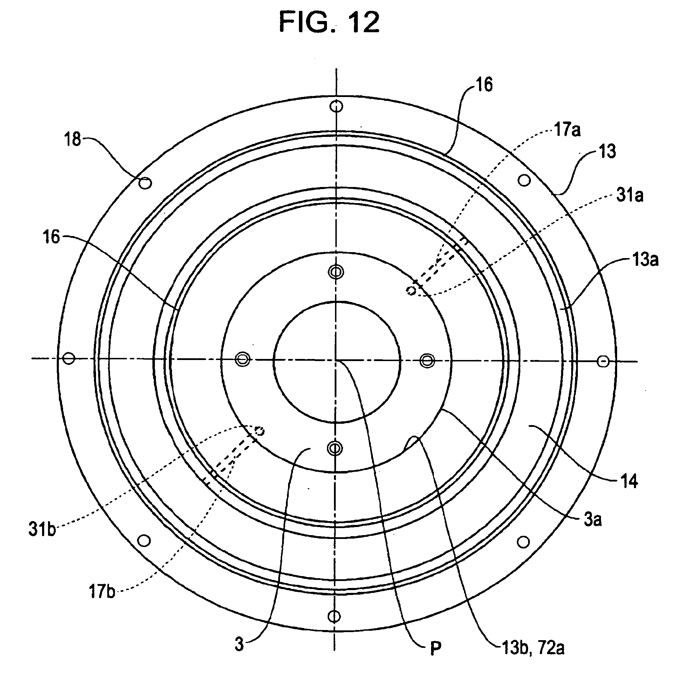

A sixth embodiment of the present invention will be described with reference to Fig. 12. In the sixth embodiment, similar to the first, fourth, and fifth embodiments, a table plate 1 is formed of a workpiece-side member 12 and a back-side member 13. Fig. 12 is a plan view, viewed from a workpiece side, illustrating the state in which the workpiece-side member 12 included in the table plate 1 is removed.

The back-side member 13 has a groove 14 formed in an opposing surface 13a thereof. The groove 14 is formed as a circumferential groove that extends over the entire circumference. The groove 14 and an opposing surface 12a of the workpiece-side member 12 form a path 21 in the table plate 1. Similar to the fourth embodiment, the path 21 has a flat shape.

Guide paths 17a and 17b are connected to the path 21 at opposite positions across an axial center P of a rotating shaft 3. The guide paths 17a and 17b are connected to openings formed in an inner peripheral surface 13b to which an outer peripheral surface 3a of the rotating shaft 3 is fitted. The coolant C passes through a supplying guide path 31a and the supplying guide path 17a, enters the path 21, and flows through the path 21 in the clockwise and counterclockwise directions, thereby cooling the table plate 1. Then, the coolant C reaches the opening of the collecting guide path 17b, and is collected through the guide path 17b and a collecting guide path 31b.

According to the present embodiment, the path 21 is formed so as to extend over the entire circumferential range in each of the four quadrants A, B, C, and D shown in Fig. 2. In other words, the path 21 extends along the entire circumference around the axial center P of the rotating shaft 3.

### Seventh Embodiment

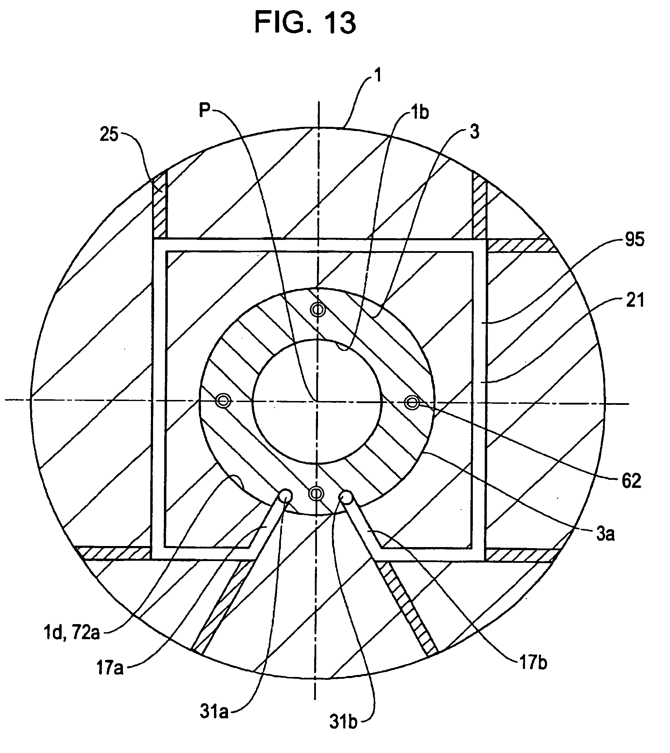

A seventh embodiment of the present invention will be described with reference to Fig. 13. Fig. 13 is a sectional view of a table plate 1 and a rotating shaft 3 taken along a plane perpendicular to the rotating shaft 3. The table plate 1 has drill holes 95 formed through an outer peripheral surface thereof so as to extend in three or more directions. The drill holes 95 are connected to each other, and openings of the drill holes 95 formed in the outer peripheral surface are sealed by stoppers 25. Thus, a path 21 is formed in the table plate 1 so as to extend about 330° around an axial center P of the rotating shaft 3. The ends of the path 21 are respectively connected to guide paths 31a and 31b in the rotating shaft 3 through a supplying guide path 17a and a collecting guide path 17b, which are also formed by drilling through the outer peripheral surface of the table plate 1.

### Eighth Embodiment

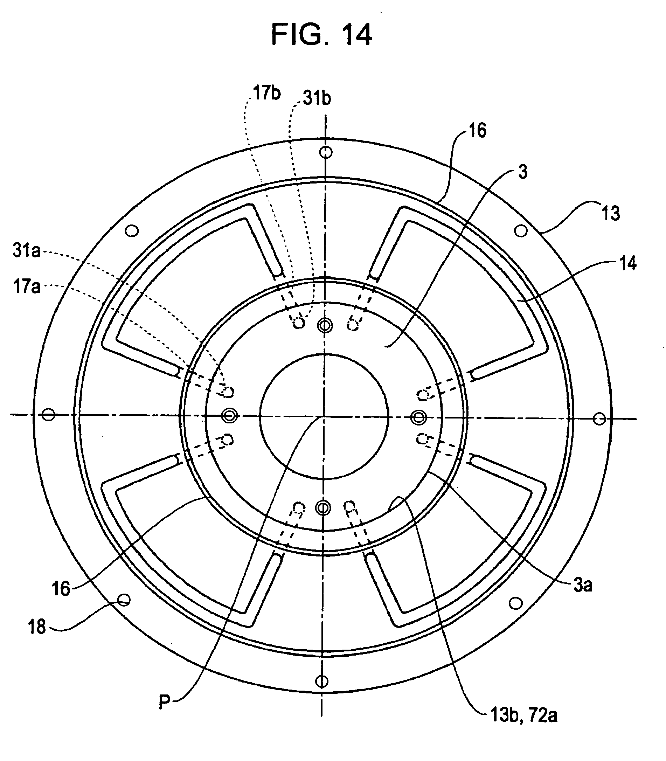

Fig. 14 shows an eighth embodiment of the present invention. In the eight embodiment, a table plate 1 is formed of a workpiece-side member 12 and a back-side member 13. Fig. 14 is a plan view, viewed from a workpiece side, illustrating the state in which the workpiece-side member 12 included in the table plate 1 is removed. A groove 14 is formed so as to extend about 60° in each of the quadrants A, B, C, and D shown in Fig. 2. Thus, the grooves 14 are formed discontinuously so as to extend about 240° in total around an axial center P of a rotating shaft 3. Four paths 21 are formed by the grooves 14 and an opposing surface 12a of the workpiece-side member 12. The ends of each path 21 are respectively connected to first ends of guide paths 31a and 31b formed in the rotating shaft 3 through guide paths 17a and 17b. Second ends of the guide paths 31a and 31b are connected to openings formed in an outer peripheral surface of the rotating shaft 3 so as to face common circumferential grooves 77a and 77b, respectively, which are formed in an inner peripheral surface of a rotary joint body 72. Thus, the ends of each of the four paths 21 are respectively connected to common guide paths 73a and 73b formed in the rotary joint body 72.

Although not shown in the figures, a coolant channel 2 may also be formed by winding a pipe 22 around the outer peripheral surface of the table plate 1. In addition, to cool the table plate 1, a cooling fin may be provided at the outer peripheral surface or the bottom surface of the table plate 1 in addition to circulating the coolant C through the coolant channel 2. In such a case, the surface area of the table plate 1 is increased and more heat is dissipated to the outside air. As a result, load on the heat exchanger 43 is reduced.

In the rotary indexing apparatus according to each of the above-described embodiments, the rotating shaft 3 is driven by a drive motor through a rotation transmission mechanism, such as a worm mechanism. However, the present invention can also be applied to a rotary indexing apparatus in which an internal motor is formed of a rotor provided on the rotating shaft 3 and a stator provided on the frame F and in which the rotating shaft 3 is driven by the internal motor. Also in this case, the table plate 1 can be cooled and prevented from being heated to a high temperature.

The present invention is not limited to the above-described embodiments, and various changes can be made within the scope of the present invention defined by the appended claims.

## Claims

1. Rotary indexing apparatus comprising a cooling device for a table plate (1), which includes a frame (F), a rotating shaft (3) supported by the frame (F), and the table plate (1) provided at an end of the rotating shaft (3) and which is capable of fixing a workpiece to be processed to the table plate (1), and a reference hole (1b, 12b) being formed in the table plate (1) such that the reference hole (1b, 12b) is coaxial with the rotating shaft (3),
wherein the table plate (1) is provided with a coolant channel (2) for allowing coolant to pass therethrough, the coolant channel (2) including at least one of a pipe and a path, the pipe being in contact with at least one of a back surface (1a) and an outer peripheral surface (13ca) of the table plate (1) and the path being disposed in the table plate (1),
wherein at least a portion of the coolant channel (2) is disposed in areas which are outside of the reference hole (1b, 12b) and which correspond to two or more of four quadrants (A, B, C, D) of the table plate (1), the four quadrants (A, B, C, D) being defined by two perpendicular lines intersecting at an axial center of the rotating shaft (3) in a plan view, and
wherein the coolant channel (2) has an inlet end (2A) and an outlet end (2B) that open in one of the outer peripheral surface (13ca) of the table plate (1) and an outer peripheral surface (3a) of the rotating shaft (3), the inlet end (2A) and the outlet end (2B) being respectively connected to a coolant-supplying path (41) and a coolant-collecting path (42) of a coolant supplying-and-collecting device (4) through a rotary joint that is fitted to said one of the outer peripheral surface (13ca) of the table plate (1) and the outer peripheral surface (3a) of the rotating shaft (3).

2. The cooling device according to claim 1, wherein the table plate (1) includes a workpiece-side member (12) and a back-side member (13) stacked on each other, at least one of opposing surfaces (12a, 13a) of the workpiece-side member (12) and the back-side member (13) having a groove extending in the areas corresponding to two or more of the four quadrants (A, B, C, D), and wherein the coolant channel (2) includes the path disposed in the table plate (1), the path either including the groove and the other one of the opposing surfaces (12a, 13a), or including a groove formed in one of the opposing surfaces (12a, 13a) and a groove formed in the other one of the opposing surfaces (12a, 13a).

3. The cooling device according to claim 2, wherein the groove extends a plurality of turns in a spiral shape around the axial center of the rotating shaft (3).

4. The cooling device according to claim 1, wherein the table plate (1) includes a workpiece-side member (12) and a back-side member (13) stacked on each other, at least one of opposing surfaces (12a, 13a) of the workpiece-side member (12) and the back-side member (13) having a groove extending over the entire circumference around the axial center of the rotating shaft (3), wherein the coolant channel (2) includes the path disposed in the table plate (1), the path including a pipe contained in the groove such that the pipe is in contact with the table plate (1) and extends a plurality of turns in a spiral shape over a range extending in a radial direction of the table plate (1).

5. The cooling device according to claim 1, wherein the coolant channel (2) includes a pipe that is in contact with the back surface (1a) of the table plate (1), the pipe being disposed on the back surface (1a) of the table plate (1) such that the pipe extends a plurality of turns in a spiral shape, and wherein the pipe is connected to the inlet end (2A) and the outlet end (2B) of the coolant channel (2) by being connected to guide paths (17a, 17b) formed in the table plate, and the pipe is covered by a lid attached to the back surface (1a) of the table plate (1).

## Patentansprüche

1. Dreh-Indexierungs-Vorrichtung umfassend eine Kühlvorrichtung für eine Tischplatte (1), die einen Rahmen (F) umfasst, eine Rotationsachse (3), die von dem Rahmen (F) gehalten ist, und die Tischplatte (1) an einem Ende der Rotationsachse (3) vorgesehen ist, und die ausgelegt ist, um ein zu bearbeitendes Werkstück an der Tischplatte (1) zu fixieren, und eine Referenzausnehmung (1b, 12b), die in der Tischplatte (1) ausgebildet ist, so dass die Referenzausnehmung (1b, 12b) koaxial zur Rotationsachse (3) ausgerichtet ist,
wobei die Tischplatte (1) mit einem Kühlmittelkanal (2) versehen ist, der es einem Kühlmittel ermöglicht, dort hindurch zu passieren, wobei der Kühlmittelkanal (2) wenigstens eines von einem Rohr und einem Pfad umfasst, wobei das Rohr mit wenigstens einer von einer hinteren Fläche (1a) und einer Außenumfangsfläche (13ca) von der Tischplatte (1) in Kontakt steht und wobei der Pfad in der Tischplatte (1) angeordnet ist,
wobei wenigstens ein Abschnitt des Kühlmittelkanals (2) in Bereichen angeordnet ist, die außerhalb der Referenzausnehmung (1b, 12b) angeordnet sind und die mit zwei oder mehreren von vier Quadranten (A, B, C, D) von der Tischplatte (1) korrespondieren, wobei die vier Quadranten (A, B, C, D) von zwei senkrechten Linien definiert sind, die sich an einem axialen Zentrum der Rotationsachse (3) in einer ebenen Ansicht schneiden, und
wobei der Kühlmittelkanal (2) ein Einlassende (2A) und ein Auslassende (2B) umfasst, das in einer von der Außenumfangsfläche (13ca) der Tischplatte (1) und einer Außenumfangsfläche (3a) der Rotationsachse (3) offen ist, wobei das Einlassende (2A) und das Auslassende (2B) jeweils mit einem Kühlmittel-Zufiihrpfad (41) und einem Kühlmittel-Sammelpfad (42) von einer Kühlmittel-Zuführ- und Sammelvorrichtung (4) über eine Drehverbindung verbunden ist, die an der einen Außenumfangsfläche (13ca) der Tischplatte (1) und der Außenumfangsfläche (3a) der Rotationsachse (3) angebracht ist.

2. Kühlvorrichtung nach Anspruch 1, bei der die Tischplatte (1) ein Werkstück-Seiten Element (12) und ein Rück-Seiten-Element (13) umfasst, die aufeinander gestapelt sind, wenigstens eine der einander gegenüberliegenden Flächen (12a, 13a) des Werkstück-Seiten-Elements (12) und des Rück-Seiten-Elements (13) eine Ausnehmung umfasst, die sich in den Bereichen erstreckt, die mit zwei oder mehr von den vier Quadranten (A, B, C, D) korrespondieren, und wobei der Kühlmittelkanal (2) den Pfad umfasst, der in der Tischplatte (1) angeordnet ist, wobei der Pfad entweder die Ausnehmung und die andere von den einander gegenüberliegenden Flächen (12a, 13a) umfasst, oder eine Ausnehmung umfasst, die in einer der gegenüberliegenden Flächen (12a, 13a) ausgebildet ist und eine Ausnehmung, die in der anderen der einander gegenüberliegenden Flächen (12a, 13a) ausgebildet ist.

3. Kühlvorrichtung nach Anspruch 2, bei der sich die Ausnehmung um mehrere Windungen in einer Spiralform um das axiale Zentrum der Drehachse (3) erstreckt.

4. Kühlvorrichtung nach Anspruch 1, bei der die Tischplatte (1) ein Werkstück-Seiten-Element (12) und ein Rück-Seiten-Element (13) umfasst, die aufeinander gestapelt sind, wenigstens eine der einander gegenüberliegenden Flächen (12a, 13a) des Werkstück-Seiten-Elements (12) und des Rück-Seiten-Elements (13) eine Ausnehmung umfasst, die sich über den gesamten Umfang um das axiale Zentrum der Drehachse (3) erstreckt, wobei der Kühlmittelkanal (2) den Pfad umfasst, der in der Tischplatte (1) angeordnet ist, wobei der Pfad ein Rohr umfasst, das in der Ausnehmung enthalten ist, so dass das Rohr mit der Tischplatte (1) in Kontakt steht und sich über mehrere Windungen in einer Spiralform über einen Bereich erstreckt, der sich in einer radialen Richtung der Tischplatte (1) erstreckt.

5. Kühlvorrichtung nach Anspruch 1, bei der der Kühlmittelkanal (2) ein Rohr umfasst, das in Kontakt mit der hinteren Fläche (1a) von der Tischplatte (1) steht, wobei das Rohr an der hinteren Fläche (1a) der Tischplatte (1) angeordnet ist, so dass sich das Rohr über mehrere Windungen in einer Spiralform erstreckt, und wobei das Rohr mit dem Einlassende (2A) und dem Auslassende (2B) des Kühlmittelkanals (2) verbunden ist, indem es mit den Führungspfaden (17a, 17b) verbunden ist, die in der Tischplatte ausgebildet sind, und das Rohr von einem Deckel bedeckt ist, der an der hinteren Fläche (1a) der Tischplatte (1) befestigt ist.

## Revendications

1. Dispositif d'indexation en rotation comprenant un dispositif de refroidissement pour un plateau de table (1), qui comprend un cadre (F), un arbre rotatif (3) supporté par le cadre (F), et le plateau de table (1) prévu à une extrémité de l'arbre rotatif (3) et qui est capable de fixer une pièce de fabrication à traiter sur le plateau de table (1), et un trou de référence (1b, 12b) formé dans le plateau de table (1) de sorte que le trou de référence (1b, 12b) soit coaxial à l'arbre rotatif (3),
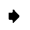 dans lequel le plateau de table (1) est pourvu d'un canal de fluide de refroidissement (2) pour permettre le passage d'un fluide de refroidissement à travers celui-ci, le canal de fluide de refroidissement (2) comprenant au moins l'un d'un tuyau et d'un trajet, le tuyau étant en contact avec au moins l'une d'une surface arrière (1a) et d'une surface périphérique externe (13ca) du plateau de table (1) et le trajet étant disposé dans le plateau de table (1),
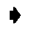 dans lequel au moins une partie du canal de fluide de refroidissement (2) est disposée dans des régions qui sont à l'extérieur du trou de référence (1b, 12b) et qui correspondent à deux de quatre quadrants (A, B, C, D) ou plus du plateau de table (1), les quatre quadrants (A, B, C, D) étant définis par deux droites perpendiculaires se croisant au niveau d'un centre axial de l'arbre rotatif (3) en vue plane, et
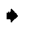 dans lequel le canal de fluide de refroidissement (2) comporte une extrémité d'entrée (2A) et une extrémité de sortie (2B) qui s'ouvrent dans l'une de la surface périphérique externe (13ca) du plateau de table (1) et d'une surface périphérique externe (3a) de l'arbre rotatif (3), l'extrémité d'entrée (2A) et l'extrémité de sortie (2B) étant respectivement reliées à un trajet de distribution de fluide de refroidissement (41) et un trajet de collecte de fluide de refroidissement (42) d'un dispositif de distribution et de collecte de fluide de refroidissement (4) par l'intermédiaire d'un joint rotatif qui est monté sur ladite une de la surface périphérique externe (13ca) du plateau de table (1) et de la surface périphérique externe (3a) de l'arbre rotatif (3).

2. Dispositif de refroidissement selon la revendication 1, dans lequel le plateau de table (1) comprend un élément côté pièce de fabrication (12) et un élément côté arrière (13) empilés l'un sur l'autre, au moins l'une des surfaces opposées (12a, 13a) de l'élément côté pièce de fabrication (12) et de l'élément côté arrière (13) comportant une rainure s'étendant dans les régions correspondant à deux des quatre quadrants (A, B, C, D) ou plus, et dans lequel le canal de fluide de refroidissement (2) comprend le trajet disposé dans le plateau de table (1), le trajet comprenant la rainure et l'autre des surfaces opposées (12a, 13a), ou comprenant une rainure formée dans l'une des surfaces opposées (12a, 13a) et une rainure formée dans l'autre des surfaces opposées (12a, 13a).

3. Dispositif de refroidissement selon la revendication 2, dans lequel la rainure s'étend sur une pluralité de tours en forme de spirale autour du centre axial de l'arbre rotatif (3).

4. Dispositif de refroidissement selon la revendication 1, dans lequel le plateau de table (1) comprend un élément côté pièce de fabrication (12) et un élément côté arrière (13) empilés l'un sur l'autre, au moins l'une des surfaces opposées (12a, 13a) de l'élément côté pièce de fabrication (12) et de l'élément côté arrière (13) comportant une rainure s'étendant sur la circonférence entière autour du centre axial de l'arbre rotatif (3), dans lequel le canal de fluide de refroidissement (2) comprend le trajet disposé dans le plateau de table (1), le trajet comprenant un tuyau contenu dans la rainure de sorte que le tuyau soit en contact avec le plateau de table (1) et s'étende sur une pluralité de tours en forme de spirale sur une plage s'étendant dans une direction radiale du plateau de table (1).

5. Dispositif de refroidissement selon la revendication 1, dans lequel le canal de fluide de refroidissement (2) comprend un tuyau qui est en contact avec la surface arrière (1a) du plateau de table (1), le tuyau étant disposé sur la surface arrière (1a) du plateau de table (1), de sorte que le tuyau s'étende sur une pluralité de tours en forme de spirale, et dans lequel le tuyau est relié à l'extrémité d'entrée (2A) et à l'extrémité de sortie (2B) du canal de fluide de refroidissement (2) en étant relié à des trajets de guidage (17a, 17b) formés dans le plateau de table, et le tuyau est recouvert d'un couvercle fixé à la surface arrière (1a) du plateau de table (1).
